# EUROPEAN PATENT APPLICATION

(11) **EP 2 730 545 A1**
(43) Date of publication of application: **14.05.2014**
(21) Application number: 13191798.1
(22) Date of filing: 06.11.2013
(51) Int. Cl.: C02F 1/00, B01D 27/14, B01D 29/00

(54) **Multi-stage fluid filter assembly with filtration membrane**

(30) Priority: 11.11.2012 US 201213674289
(71) Applicant: WHIRLPOOL CORPORATION, Benton Harbor, MI 49022 (US)
(72) Inventor: Patera, Ginger Elayne, 21025 Comerio (IT); Senninger, Mark M., 21025 Comerio (IT)
(74) Representative: Guerci, Alessandro

(57) **Abstract**

A multi-stage, coaxially configured, fluid filter assembly includes a first filter stage, a second filter stage, and a porous filtration membrane. The first filter stage has a coarse medium spaced in a volume between an outer surface and an inner surface thereof, such that fluid may come into operative contact with the coarse medium to remove first stage materials from the fluid. The second filter stage is coaxially spaced within the first stage and is configured to receive fluid from the first filter stage. A moderate medium in the second filter stage is configured to remove second stage materials from the fluid. The porous filtration membrane is engaged with the inside surface of the second filter stage and has fine pores for filtering small particles from the fluid. The first and second stage materials are suspended away from the filtration membrane to filter the small particles.

## Description

### FIELD OF THE INVENTION

The present invention generally relates to fluid filtration assemblies, namely water filters for faucets or appliances, typically domestic refrigerators, refrigerators and freezers, freezers, or ice making devices. More specifically, the present invention relates to a self-contained multistage fluid filter assembly with a porous filtration membrane where the filter assembly is adapted to engage an interior cavity of an appliance, a household faucet, or other water dispensing sources and configures to engage such interior cavity by hand and without the use of tools.

### BACKGROUND OF THE INVENTION

Carbon-based water filters are commonly used in appliances and applied to other household water sources, such as mounted to kitchen faucets, to filter water for direct use or consumption or for ice making or other functions. Generally these applications of water filters require the filter to be substantially compact in size and free of internal moving parts. Further, these filters in some instances are relied upon to filter an increased variety of impurities from water sources, such as well water and municipal water, for human consumption.

To date, membrane filtration systems have not been employed in filters used in connection with appliances or engaged to a standard faucet outlet for a variety of reasons despite the fact that they typically purify water to a greater extent than carbon-only based filters. For one, such systems are large, typically under cabinet and plumbed in line systems. Secondly, because the membrane accumulates contaminants of various particle sizes as well as a multitude of ions, the membrane clogs easily and becomes occluded over an extended period of time. Accordingly, the membrane, in some cases, is required to be tangentially flushed across running water to remove the impurities and large particles to continue to function properly. This may require disassembly of the overall system, removal of the membrane, tangential flushing, and reinstallation of the filter and the systems in the water line. Accordingly, with the development of filtration technology, including membrane microfiltration, household water filters at the water outlet and appliance water filters have not implemented this technology due to the frequent need to tangentially flush the membrane so as to remove any accumulated particles and ions that clog the membrane. Typically, appliances are not equipped with drains or other equipment to accommodate the frequent tangential flushing necessary to implement a membrane filter. In addition, the appliance filters are typically sanitary and enclosed units that are designed to be unopenable without the use of tools, which may damage the filter units. As such, tangential flushing is not possible for such units and, as a result, membrane filter systems have not been employed in such filter assemblies.

### SUMMARY OF THE INVENTION

According to one aspect of the present invention, a multi-stage, coaxially configured, fluid filter assembly includes a first filter stage that has an outer surface configured to receive a fluid, an inner surface configured to dispense fluid, and a coarse medium between the outer surface and the inner surface. The first filter stage is configured to allow the fluid to pass through the outer surface, into operative contact with the coarse medium to remove first stage materials from the fluid. A second filter stage is coaxially spaced within the first filter stage and operatively engaged with the inner surface to receive fluid from the first filter stage. The second filter stage has a moderate medium to remove second stage materials from the fluid and an inside surface to dispense fluid received from the first filter stage. A porous filtration membrane has fine pores for filtering small particles from the fluid and is engaged with the inside surface of the second filter stage. The filtration membrane is configured to receive fluid from the second filter stage, thereby suspending first stage and second stage materials away from the filtration membrane to prevent the materials from clogging the fine pores.

According to another aspect of the present invention, a multi-stage coaxially configured, water filter assembly for an appliance includes a tubular shaped first filter cartridge having an porous outer surface configured to receive a water flow, a porous inner surface configured to dispense the water flow, and a first volume between the outer surface and the inner surface to filter large particles from the water flow. The water filter assembly also includes a tubular shaped second filter cartridge coaxially spaced within the first filter cartridge. The second filter cartridge has a porous outside surface configured to receive the water flow from the first filter cartridge, a porous inside surface for dispensing the water flow, and a second volume between the outside surface and the inside surface to filter intermediate particles and chemicals from the water flow. A porous filtration membrane having fine pores for filtering metallic ions from the water flow is disposed over the inside surface of the second filter cartridge. A housing encloses and removably engages the first filter cartridge, the second filter cartridge, and the filtration membrane. The housing has an inlet and an outlet for receiving and dispensing the water flow, respectively, to and from the appliance. In addition, the housing is configured to be removably engaged with a filter head assembly of the appliance. Further, the housing has an interior capable of being accessed by a user without the use of tools when the water filter assembly is removed from the appliance, such that the user may remove any one or more of the group consisting of the first filter cartridge, the second filter cartridge, and the filtration membrane.

According to yet another aspect of the present invention, a multi-stage, coaxially configured, fluid filter assembly includes a tubular shaped filter stage having an outer surface configured to receive a fluid from an appliance, an inner surface configured to dispense fluid, and a filtration medium between the outer surface and the inner surface configured to allow the fluid to pass through the outer surface, into operative contact with the filtration medium to filter particles and chemicals from the fluid. The fluid filter assembly also includes a tubular shaped porous filtration membrane having fine pores for filtering metallic ions from the fluid. The filtration membrane is engaged with the inner surface of the filter stage and is configured to receive fluid from the filter stage, such that large and intermediate particles are suspended away from the filtration membrane to prevent the particles from clogging the fine pores. In addition, a fluid treatment stage is coaxially spaced within the filter stage and has a substantially equal length to the filter stage and the filtration membrane. The filter treatment stage is configured to receive fluid from the filtration membrane, treat the fluid, and dispense the fluid back to the appliance. A pair of pressure fit caps are couple to a first end portion and a second end portion of the filter stage and the porous filtration membrane, such that the water flow must pass sequentially through the fluid filter assembly.

According to yet another aspect of the present invention, a multi-stage, coaxially configured, fluid filter assembly includes a filter stage that has a first surface configured to receive a fluid from an appliance, a second surface configured to dispense fluid, and a filtration medium between the first surface and the second surface. The filtration medium is configured to allow the fluid to pass in through the first surface, into operative contact with the filtration medium, and pass out though the second surface to filter particles from the fluid. A porous filtration membrane is configured to receive fluid from the filter stage, bring the fluid into operative contact with the membrane for filtering metallic ions from the fluid, and to dispense the fluid away from the membrane. Large and intermediate particles are suspended away from the filtration membrane by the filtration medium to prevent the particles from clogging the fine pores. A housing includes an inlet to receive fluid, an outlet to dispense fluid that has come into operative contact with the filtration membrane, and an interior to sealably contain at least the filtration membrane. The interior is inaccessible without the use of tools. The housing is adapted to engage a filter head assembly of the appliance.

These and other features, advantages, and objects of the present invention will be further understood and appreciated by those skilled in the art by reference to the following specification, claims, and appended drawings.

### BRIEF DESCRIPTION OF THE DRAWINGS

FIG. 1 is a front view of a refrigerator and freezer appliance that indicates the general location where a fluid filter assembly of the present invention may be operably connected to the appliance;

FIG. 2 is front view of a refrigerator and freezer appliance having a refrigerator door open and indicating a general location where a fluid filter assembly of the present invention may be operably connected to the appliance;

FIG. 3 is a perspective side view of a filter head assembly of an appliance;

FIG. 4 is a side perspective exploded view of a fluid filter assembly of the present invention;

FIG. 5 is a side perspective view of a porous filtration membrane with an exploded section showing layers of the membrane;

FIG. 6 is a side perspective view of an assembled fluid filter assembly of the present invention;

FIG. 6A is a side cross-sectional view of a fluid filter assembly of the present inventions taken about line A-A of FIG. 6 with an exploded section showing particle accumulation in the filters stages;

FIG. 6B is a top cross-sectional view of a fluid filter assembly of the present invention taken about line B-B of FIG. 6;

FIG. 6C is a top cross-sectional view of a housing of the fluid filter assembly with an alternative embodiment of the channel formed in the housing;

FIG. 6D is a top cross-sectional view of a housing of the fluid filter assembly with an alternative embodiment of the channel formed in the housing;

FIG. 6E is a top cross-sectional view of a housing of the fluid filter assembly with an alternative embodiment of the channel formed in the housing;

FIG. 7 is a side perspective view of another embodiment of the fluid filter assembly attached to a faucet head;

FIG. 7A is a side cross-sectional view of a fluid filter assembly of the present invention taken about line A-A of FIG. 7; and

FIG. 8 is a side perspective view of two other embodiments of the fluid filter assembly of the present invention.

### DETAILED DESCRIPTION

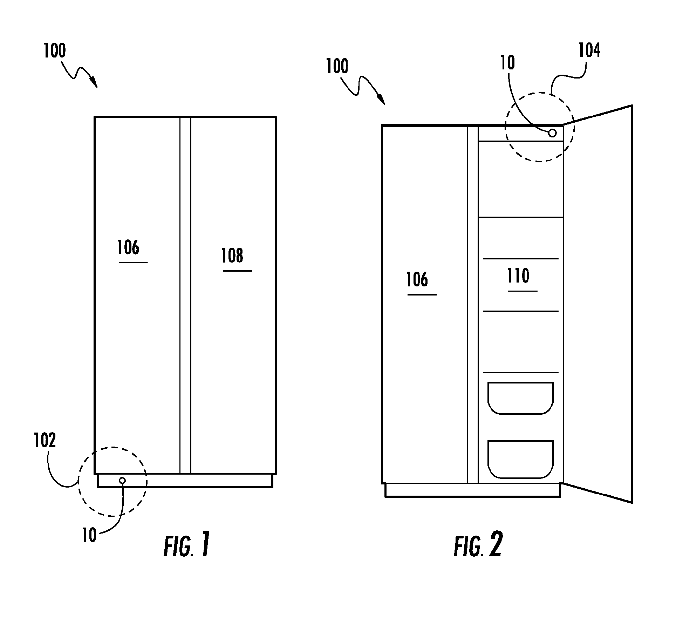

For purposes of description herein, the terms "upper," "lower," "right," "left," "rear," "front," "vertical," "horizontal," and derivates thereof shall relate to the invention as oriented in FIG. 1. However, it is to be understood that the invention may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

As generally illustrated in FIGS. 1-7, the reference numeral 10 generally designates one embodiment of a multi-stage fluid filter assembly 10. The fluid filter assembly 10 typically includes a first filter stage 12, a second filter stage 14, and a porous filtration membrane 16. The first filter stage 12 has a coarse medium 18 spaced in a volume 20 between an outer surface 22 and an inner surface 24 thereof, such that fluid may come into operative contact with the coarse medium 18 to remove first stage materials 25 from the fluid. The second filter stage 14 is coaxially spaced within the first filter stage 12 and is configured to receive fluid from the first filter stage 12. A moderate medium 26 in the second filter stage 14 is configured to remove second stage materials 27 from the fluid. The porous filtration membrane 16 is engaged with an inside surface 28 of the second filter stage 14 and has fine pores 30 for filtering small particles 31 from the fluid. The first and second stage materials 25, 27 are larger than the small particles 31, including metallic ions, and are suspended away from the filtration membrane 16

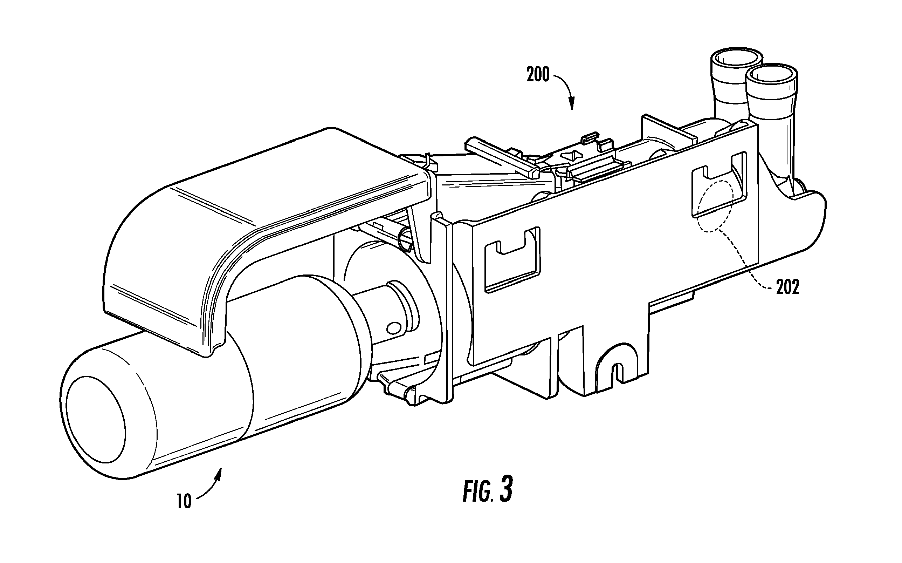

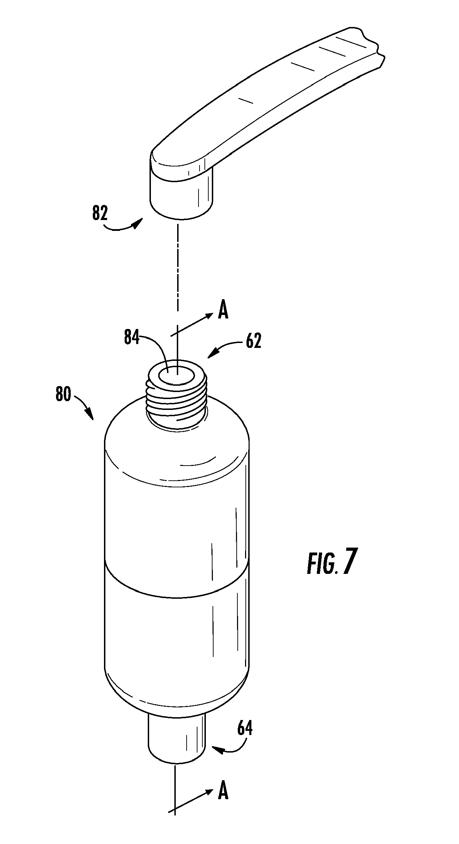

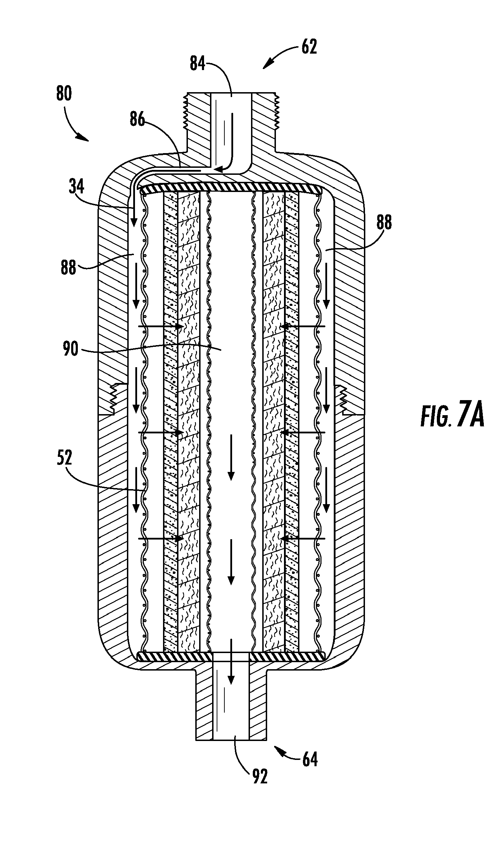

As shown in FIGS. 1-3, the fluid filter assembly 10 is generally installed by hand and without the use of tools and is removably engaged with a domestic refrigerator appliance 100. Filter assemblies of the present invention may also be used in other applications, including other appliances that store, use, or dispense ice, water, or other liquid to be filtered and/or treated. In addition, the fluid filter assembly 10 may be used with a household faucet, typically by engagement at or proximate the faucet outlet, (FIG. 7) or other water source, which is described in more detail below. The fluid filter assembly 10 is generally configured to engage the appliance 100, typically via a filter head assembly 200 (FIG. 3) in either the lower grille portion 102 (FIG. 1) or the upper panel portion 104 (FIG. 2) of a domestic refrigerator. Generally, the filter assembly is pushed into the cavity aperture of the filter head assembly 200 and typically twisted about its central longitudinal axis by hand without the use of tools into engagement and out of engagement with the appliance. In the illustrated embodiments, a side-by-side domestic refrigerator is shown having a freezer section 106 on the left side and a refrigerator section (fresh food compartment) 108 on the right side.

The interior portion 110 of the refrigerator section 108 typically has an upper panel portion 104 extending across the top portion of the section. Generally, a fluid filter assembly 10 that is located on the interior portion 110 of the appliance 100 is located in the refrigerator section 108 to avoid freezing temperatures. In particular, the upper panel portion 104 in a refrigerator section 108 provides a suitable location for the fluid filter assembly 10, as this location is also frequently occupied by temperature controls or other user interfaces or displays a drop down, push button activated access door in the ceiling of the appliance 100 may also be opened and the fluid filter assembly 10 inserted and engaged to the appliance through this access door.

The lower grille portion 102 of the domestic refrigerator appliance 100 is also a suitable location for the fluid filter assembly 10, as such a location typically provides close proximity to a water source connection leading to the appliance 100, has an above-freezing temperature, and is near other electrical components and devices, such a the compressor. Additionally, other suitable locations that allow water egress and ingress are conceivable on domestic refrigerators, refrigerators and freezers, freezers, ice makers, and other related appliances.

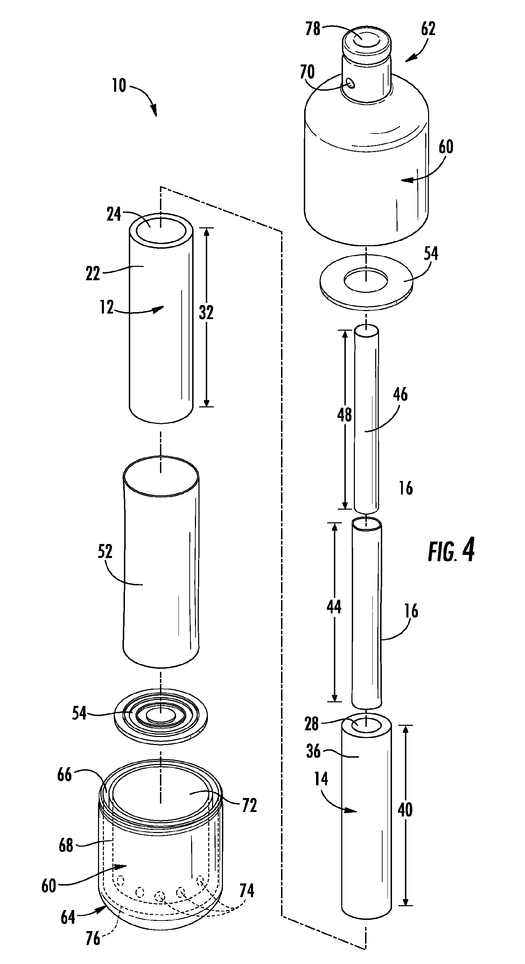

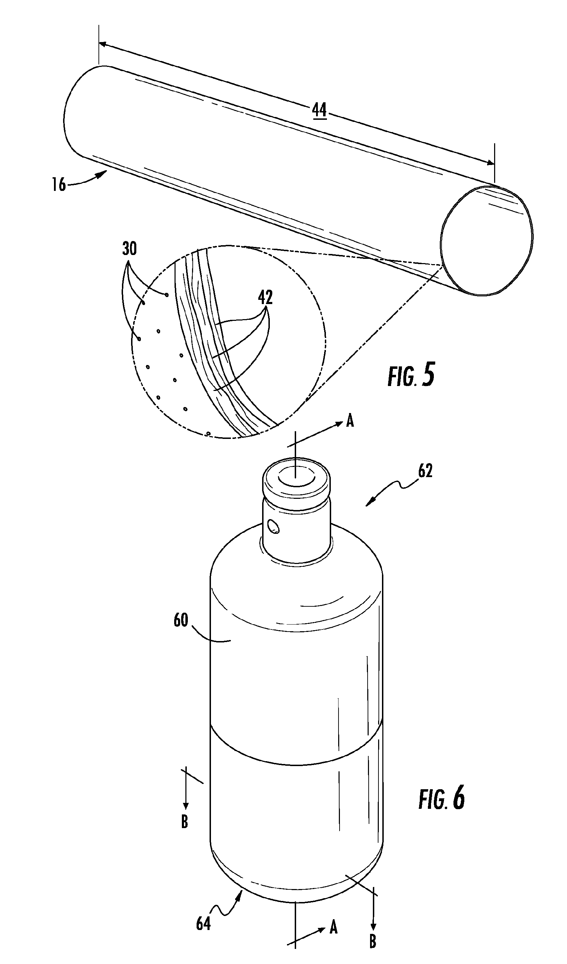

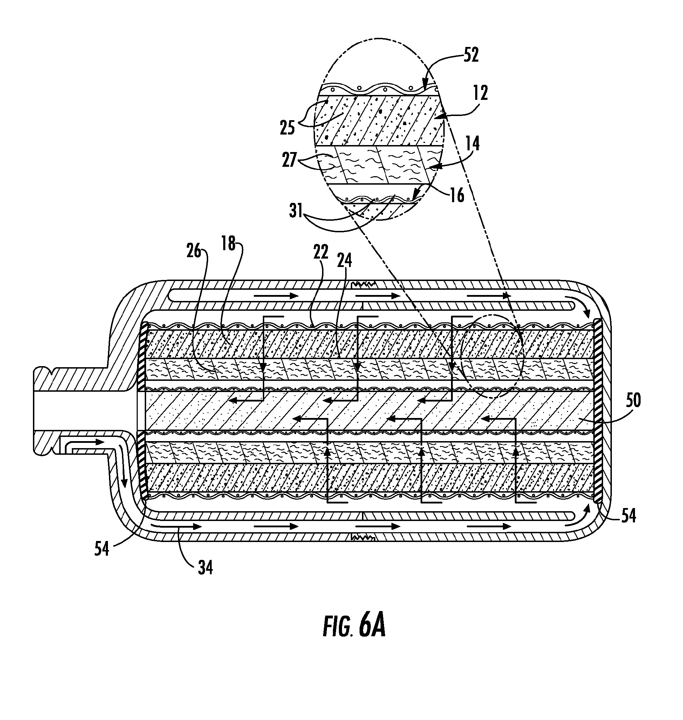

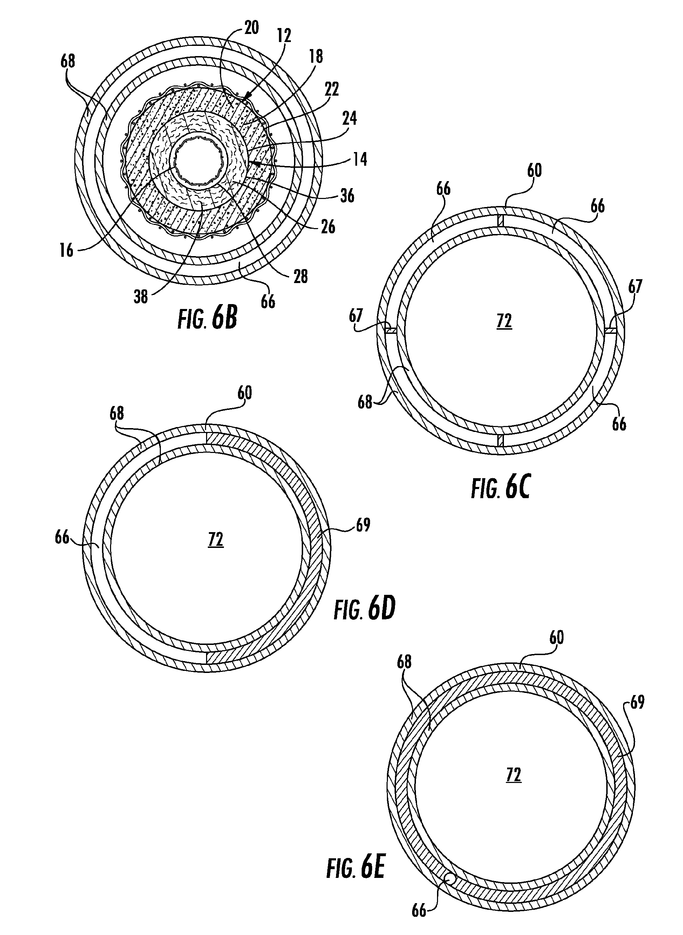

Referring to FIG. 4, the first filter stage 12 typically has a substantially tubular shape and includes an outer surface 22 and an inner surface 24. Between the outer surface 22 and the inner surface 24 and extending a first length 32 of the first filter stage 12 defines a first volume 20, as shown in FIG. 6B. The first volume 20 includes a coarse medium 18 spaced within the volume 20 that is configured to filter first stage materials 25 from a water flow 34, as further illustrated in FIG. 6A. The coarse medium 18 is comprised primarily of particulate carbon or carbon-based material. However, other medium could be added or substituted for carbon or carbon-based material that is configured to similarly remove first stage materials 25 from the water flow 34 moving through the first filter stage 12. Alternatively, the coarse medium 18 may include synthetic fibers, natural fibers, a mesh material, a wire mesh, a polymer screen or a combination of these materials. The outer surface 22 is substantially porous and configured to receive fluid and place the fluid in operative contact with the coarse medium to remove the first stage materials from the fluid.

The first stage materials 25 may include large particles or other particles or chemicals that the coarse medium 18 is configured to remove from the fluid. More specifically, the first stage materials 25 comprise large particles and suspended solids that are typically sized in a range between 1 micron and 1000 microns, and may exceed 1000 microns in some instances. In addition, it is conceived that the shape of the first filter stage 12 may alternatively include an oval cross-section tubular shape, a square cross-section tubular shape, and a conical shape, among other shapes and configurations.

The second filter stage 14, as shown in FIG. 4, is also typically tubular shaped and includes an outside surface 36, an inside surface 28, a second length 40, and a second volume 38 (FIG. 6B) defined along the second length 40 between the inside surface 28 and the outside surface 36 of the second filter stage 14. The inner surface 24 of the first filter stage 12 slidably engages the outside surface 36 of the second filter stage 14, such that the second filter stage 14 is coaxially aligned within the first filter stage 12. Further, the second length 40 of the second filter stage 14 is substantially equal to the first length 32 of the first filter stage 12 to effectuate the substantially perpendicular flow of water 34 between the first filter stage 12 and the second filter stage 14. The outside surface 36 of the second filter stage 14 is substantially porous and configured to receive fluid from the first filter stage 12 and place the fluid in operative contact with a moderate medium 26 in the second filter stage 14, as shown in FIG. 6A, to remove second stage materials 27 from the fluid.

The second volume 38 includes the moderate medium 26 spaced therein, and the moderate medium 26 is typically relatively more compact or comprised of smaller filter media with closer spacing than the coarse medium 18 of the first filter stage 12. The moderate medium typically includes carbon and carbon based particles with a high porosity. In one conceivable embodiment, the moderate medium 26 includes an aluminosilicate component, which is typically ALUSIL™ or ALUSIL NZ™ from Selecto Scientific, Inc. of Suwanee, Georgia. The aluminosilicate component is typically an aluminosilicate salt, more typically sodium aluminosilicate. The aluminosilicate component typically includes a combination of a nanoparticulate compound typically chosen from a transition metal oxide, metal hydroxide, or combinations thereof in an aluminosilicate. For example, titanium dioxide or a nanozinc component (engaged) bound to an aluminosilicate using a binder, in particular, a polyvinylpyrrolidone. The aluminosilicate typically has an average pore diameter ranging from about 100 to about 300 angstroms or up to about 300 angstroms. The nanoparticulate compound is usually either distributed on or in the aluminosilicate component. The aluminosilicate compound is typically a synthetic aluminosilicate component. The moderate medium 26 is generally configured to filter intermediate particles and chemicals from the water flow 34 (FIG. 6A). The second stage materials 27 include intermediate particles or other particles or chemicals that the moderate medium 26 is configured to remove from the fluid. More specifically, the second stage materials 27 comprise particles that are typically sized in a range between 0.1 micron and 1 micron, however, the size may generally exceed 1 micron at least up to 80 microns. In addition, it is conceived that the shape of the second filter stage 14 may alternatively include an oval cross-section tubular shape, a square cross-section tubular shape, and a conical shape, among other shapes and configurations. Typically, the second stage includes an activated carbon to extending the life of the membrane by removing chlorine that could damage the membrane.

As illustrated in FIGS. 4 and 5, the porous filtration membrane 16 is typically substantially tubular shaped and is comprised of a plurality of membrane layers 42 that together form a thin-film composite membrane that has fine pores 30 formed therein. The porous filtration membrane 16 is typically made of a cellulose acetate, polysulfone, or polyamide material, and may also include any combination thereof. The porous filtration membrane 16 may also include a molecular sieve, such as one or more zeolites, and/or one or more ion-exchange resins, which typically operate to remove at least some charged particles. The fine pores 30 of the filtration membrane generally have a diameter selected from a range typically between 1 nanometer and 15 microns, more typically between 1 nanometer and 0.1 microns. The fine pores 30 in the filtration membrane are configured to filter small particles 31, including metallic ions, from the water flow 34, as shown in FIG. 6A. More specifically, filtration membrane 16 may be electrostatically charged to attract charged molecules and metallic ions, typically including calcium, magnesium, lead, and manganese, among other similar ions. Accordingly, the filtration membrane 16 filters the charged molecules and metallic ions from the water flow 34 by the charged molecules and metallic ions attaching to the filtration membrane 16 as the water flow 34 passes over or through the fine pores 30. Other small particles 31 are filtered by the filtration membrane 16 as the water flow 34 passes through the fine pores 30. The membrane also removes organic solutes with molecular weight (MW) typically greater than 100 amu. The fine pores 30 are relatively more narrow than openings in the compact or closely spaced coarse medium 18 of the first filter stage 12 and the moderate medium 26 of the second filter stage 14.

Further, as illustrated in FIG. 4, the filtration membrane 16 has a third length 44 substantially equal to the second length 40 of the second filter stage 14. As such, the filtration membrane 16 is typically engaged with the entire inside surface 28 of the second filter stage 14, and is configured to receive fluid from the second filter stage 14 and dispense the fluid after passing through the fine pores 30. In addition, it is conceived that the shape of the filtration membrane 16 may alternatively include an oval cross-section tubular shape, a square cross-section tubular shape, and a conical shape, among other shapes and configurations.

Still referring to FIG. 4, a cylindrical shaped fluid treatment segment 46 is slidably and coaxially engaged within the filtration membrane 16. The fluid treatment segment 46 is coaxially spaced within the second filter stage 14 and has a fourth length 48 substantially equal to the third length 44 of the filtration membrane 16. In addition, the treatment segment 46 typically has a substantially porous sidewall defining a perimeter of treatment segment and spanning the fourth length 48 thereof. A treatment media 50, as illustrated in FIG. 6A, is disposed within the fluid treatment segment 46, spaced coaxially within and surrounded by the substantially porous sidewall. The fluid treatment segment 46 is configured to treat water flow 34 passing through the substantially porous sidewall and coming into operative contact with the treatment media 50, such that a treatment may be applied to the fluid. In addition, it is conceived that the shape of the fluid treatment segment 46 may alternatively include an oval cross-section cylindrical shape, a rectangular prism shape, and a conical shape, among other shapes and configurations. It is also conceived that the fluid treatment segment 46 may be integrated with the first filter stage 12 or second filter stage 14 to treat water before it passes through the filtration membrane 16.

The treatments may include filtering particulate matter from a fluid, adding vitamins, minerals, or other health enhancing additives to the water flow 34, and adding the de-scaling agent to the water flow 34 chosen from the group consisting of sulfonic acid, carboxylic acid, lactic acid, acetic acid, formic acid, oxalic acid, uric acid, phosphoric acid, hydrochloric acid, sulfamic acid, and mixtures thereof. The treatment medium 50 may also chosen from the group consisting of: carbon (e.g., activated carbon particles, such as mesoporous activated carbon, carbon powder, particles sintered with a plastic binder, carbon particles coated with a silver containing material, or a block of porous carbon); ion exchange material (e.g., resin beads, flat filtration membranes, fibrous filtration structures, etc.); zeolite particles or coatings (e.g., silver loaded); polyethylene; charged-modified, melt-blown, or microfiber glass webs; alumina; aluminosilicate material; and diatomaceous earth. The treatment medium 50 may also be impregnated or otherwise disposed on a porous support substrate, such as a fabric material, a paper material, a polymer screen, or other conceivable porous structures that may be contained in the individual cartridges, which in some instances may be configured to allow the fluid to flow across the support substrate and not through the support substrate. The fluid treatment segment 46 may be removed from or optionally included with the fluid filter assembly 10. Further, the fluid treatment segment 46 may be selectively chosen for the desired water treatment. It is also contemplated that the treatment segment 46 is a smaller or different shaped configuration, such as a tablet, that may optionally be provided or inserted in the fluid filter assembly 10 at multiple various locations to provide effective treatment or treatments to the fluid.

As also illustrated in FIG. 4, pre-filter material 52 having a substantially tubular shape typically engages the outer surface 22 of the first filter stage 12. The pre-filter material 52 surrounds a perimeter of the first filter stage 12 and extends the length 32 of the first filter stage 12. The pre-filter material 52 is configured to filter larger particles from the water flow 34 than the first and second stage materials, 25, 27. More specifically, the larger particles comprise particles typically sized in a range between 500 microns and 2000 microns. Accordingly, the pre-filter material 52 is configured to have relatively larger openings than the spacing in the coarse medium 18 of the first filter stage 12 and the moderate medium 26 of the second filter stage 14. It is contemplated that the pre-filter material 52 may include synthetic fibers, natural fibers, a mesh material, a wire mesh, a polymer screen or a combination of these materials. In addition, it is conceived that the shape of the pre-filter material 52 may alternatively include an oval cross-section tubular shape, a square cross-section tubular shape, and a conical shape, among other shapes and configurations.

A pair of pressure fit caps 54, as shown in FIG. 4 and 6A, are disposed at opposing ends of the coaxially assembled pre-filter material 52, first filter stage 12, second filter stage 14, the filtration membrane 16, and fluid treatment segment 46. The pressure fit caps 54 may be extruded over, snap-fit, threadably engaged, or otherwise secured to at least the first filter stage 12 and second filter stage 14 to force the water flow 34 to sequentially pass through the fluid filter assembly 10 in a substantially perpendicular fashion, as illustrated in FIG. 6A. As shown in the exemplary embodiment of FIG. 4, the caps 54 may include grooves positioned to receive and secure, for example, by threadable attachment, snap-fit attachment, one or more of the pre-filter material 52, first filter stage 12, second filter stage 14, the filtration membrane 16, and the treatment segment 46.

Referring to FIG. 4, an exterior cylindrical-shaped housing 60 is configured to enclose the assembled pre-filter material 52, first filter stage 12, second filter stage 14, filtration membrane 16, fluid treatment segment 46, and pressure fit caps 54. The housing 60 has a first end 62, an opposing second end 64, and a channel 66 extending between the first and second ends 62, 64 within a sidewall 68 of the housing 60. As illustrated in FIG. 4, the housing has a first half part and a second half part such that the first half part is proximate the first end 62 and is threadably engaged with the second half part, which is proximate the second end 64, at a mid-portion of the housing. Accordingly, the first half part may be threadably removed from the second half part by hand and without the use of tools, such that the various filter stages may be removed, inserted or replaced. It is also contemplated that the first half part may be snap-fit or attached in an alternative configuration, such as with the use of a latching device, with the second half part.

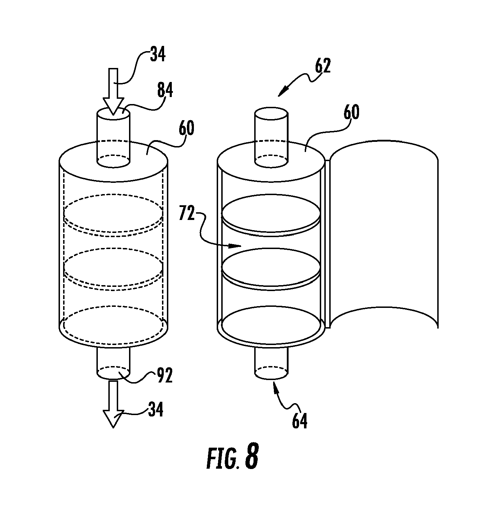

Further, as illustrated in an additional embodiment in FIG. 8, it is contemplated that the housing 60 may have an interior 72 that is accessible to a user without the use of tools via a door hingeably attached longitudinally along the sidewall of the housing. In addition, it is conceived that the shape of the housing 60 may alternatively include an oval cross-section cylindrical shape, a rectangular prism shape, and a conical shape, among other shapes and configurations, such that the shape is configured to contain the shape of the various filtration and treatment stages. It is further contemplated that the housing 60 does not open by hand to allow access to interior of the fluid filter assembly 10, moreover that if the housing 60 was opened with the assistance of tools, it would result in damage to the housing 60, such that it could not be rejoined and still function as originally designed.

Referring to FIG. 4, the channel 66 extends from an inlet 70 at the first end 62 of the housing 60 within the sidewall 68 to the second end 64 of the housing 60, where the channel 66 allows for fluid communication with the interior 72 of the housing 60. The channel 66 fluidly connects with the interior 72 of the housing 60 via a series of apertures 74 formed at the second end 64 of the housing 60, between the channel 66 and a cavity 76 at the second end 64 of the housing 60. Upon complete transgression of a water flow 34 in the inlet 70, through the channel 66 and the series of apertures 74, and substantially perpendicularly through the various filter stages, the water flow 34returns to the first end 62 of the housing 60 to an outlet 78 typically formed centrally at the end thereof.

Some various embodiments of the channel 66 are illustrated in FIGS. 6B-6E. As shown in FIG. 6B, the channel surrounds the entire perimeter of the sidewall 68 of the housing 60, such that the channel 66 is supported primarily by the first and second ends of the housing and the interior wall of the sidewall 68 is only supported at the first end 62 of the housing 60, as shown in FIG. 4. As shown in FIG. 6C, the channel 66 includes stabilizers 67 extending between the exterior wall and the interior wall of the housing 60 along the length of the housing 60. The stabilizers 67 are provided to maintain a consistent spaced distance between the interior and exterior walls of the sidewall 68 of the housing 60. As shown in FIG. 6D, the channel is partially filled with a solid portion 69, thereby reducing the area of the channel 66, such that the solid portion 69 may be increased or decreased to respectively increase or decrease the flow rate of the fluid through the fluid filter assembly 10. FIG. 6E shows another embodiment of the channel, wherein the channel is substantially cylindrical in shape and a solid portion 69 fills the remaining area of the channel 66. It is also contemplated that multiple channels may extend within the sidewall 68 to deliver the fluid from the first end 62 to the second end 64 of the housing 60. In addition, it is understood that the channel or channels may use any shape or orientation that allows for fluid to flow from the first end to the second end of the housing. The first end 62 of the housing 60, also referred to as the attachment end, operably engages by hand with a connection port 202 (FIG. 3) in the filter head assembly 200 of the appliance 100.

Referring now to an alternative embodiment of the fluid filter assembly in FIG. 7, generally designated with the reference numeral 80. As shown, the fluid filter assembly 80 threadably engages a common faucet head 82 by rotating the fluid filter assembly by hand. As shown in FIG. 7A, the first end 62 of the fluid filter assembly 80 includes an inlet 84 centrally formed therein and a channel 86 from the inlet extending to an exterior cavity 88 surrounding the pre-filter material 52 from the first end 62 to the second end 64 of the fluid filter assembly 80. Similarly, a water flow 34 enters the fluid filter assembly through the inlet and passes through the various filtration stages substantially perpendicularly. Ultimately, the water flow 34 enters a central cavity 90 of the fluid filter assembly and exits the second end 64 via an outlet 92 formed therein.

As shown in FIG. 8, yet another alternative embodiment of the fluid filter assembly is illustrated. Similar to the embodiment shown in FIG. 7, the first end 62 includes an inlet 84 and the second end 64 includes an outlet 92. However, the filter stages contained therein are stacked longitudinally in series, thereby eliminating the need for a channel extending from the inlet 84 to the second end 64 of the housing. In such an embodiment, the prefilter material 52 and the filtration membrane 16 are also disk shaped.

In another conceivable embodiment of the fluid filter assembly, the filtration membrane 16 may be disposed in a separately contained first housing separate from a second housing containing filter material such as the first and second filter stages 12, 14. In such an embodiment, the first housing containing the filtration membrane is removably engagable by hand without the use of tools with a second housing containing the first and second filter stages 12, 14, in such a manner that water flow 34 sealably travels between the second housing and the first housing. The manner of engagement and fluid interaction between the first and second housings of such a conceivable embodiment is described in more detail in the application, serial no. 13/674300, entitled CUSTOMIZABLE MULTI-STAGE WATER TREATMENT ASSEMBLY, which is related to this application and is incorporated by reference in its entirety, as stated above.

In the above described embodiments of the fluid filter assembly, the assembled and installed fluid filter assembly has a membrane filter system that does not require tangential flushing and will function at least for a substantially similar useful life as a typical carbon-based filter of an appliance 100 or water faucet outlet. The useful life is typically at least 100 to 300 gallons of fluid flowing through the fluid filter assembly, more typically 100 to 200 gallons, which commonly takes 180 days, depending upon the frequency of use and the source water quality.

It will be understood by one having ordinary skill in the art that construction of the described invention and other components is not limited to any specific material. Other exemplary embodiments of the invention disclosed herein may be formed from a wide variety of materials, unless described otherwise herein. In this specification and the amended claims, the singular forms "a," "an," and "the" include plural reference unless the context clearly dictates otherwise.

Where a range of values is provided, it is understood that each intervening value, to the tenth of the unit of the lower limit unless the context clearly dictates otherwise, between the upper and lower limit of that range, and any other stated or intervening value in that stated range, is encompassed within the invention. The upper and lower limits of these smaller ranges may independently be included in the smaller ranges, and are also encompassed within the invention, subject to any specifically excluded limit in the stated range. Where the stated range includes one or both of the limits, ranges excluding either or both of those included limits are also included in the invention.

It is also important to note that the construction and arrangement of the elements of the invention as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present invention. The exemplary structures and processes disclosed herein are for illustrative purposes and are not to be construed as limiting.

## Claims

1. A multi-stage, coaxially configured, fluid filter assembly (10) comprising:
a first filter stage (12) having an outer surface configured to receive a fluid, an inner surface configured to dispense fluid, and a coarse medium (18) between the outer surface and the inner surface, wherein the first filter stage is configured to allow the fluid to pass through the outer surface, into operative contact with the coarse medium (18) to remove first stage materials from the fluid;
a second filter stage (14) coaxially spaced within the first filter stage (12) and operatively engaged with the inner surface to receive fluid from the first filter stage, wherein the second filter stage has a moderate medium (26) to remove second stage materials from the fluid and an inside surface configured to dispense fluid received from the first filter stage; and
a porous filtration membrane (16) having fine pores (30) for filtering small particles (31) from the fluid, wherein the filtration membrane is engaged with the inside surface of the second filter stage and is configured to receive fluid from the second filter stage, thereby suspending first stage and second stage materials away from the filtration membrane to prevent the first stage and second stage materials from clogging the fine pores (30).

2. The fluid filter assembly of claim 1, wherein the filtration membrane (16) is configured to dispense fluid after passing though the fine pores (30), and wherein the fluid filter assembly includes a fluid treatment segment (46) engaged with the filtration membrane and having a treatment medium spaced within the fluid treatment segment configured to receive fluid from the filtration membrane, treat the fluid, and dispense the fluid.

3. The fluid filter assembly of claim 1, further comprising:
a pre-filter material (52) surrounding a perimeter of the first filter stage (12) and engaging the outer surface of the first filter stage, wherein the pre-filter material is configured to remove large particles from the fluid having a particle size greater than the first stage materials (25).

4. The fluid filter assembly of claim 1, wherein the first filter stage (12) and second filter stage (14) are tubular shaped, and wherein the filtration membrane (16) is positioned coaxially within the second filter stage (14) and the second filter stage is positioned coaxially within the first filter stage (12).

5. The fluid filter assembly of claim 1, further comprising:
a housing (60) enclosing the first filter stage (12), the second filter stage (14), and the filtration membrane (16), wherein the housing is configured to be removably engaged with a filter head assembly of an appliance.

6. The fluid filter assembly of claim 5, wherein the housing (60) further includes an inlet in fluid communication with the outer surface of the first filter stage (12) and an outlet in fluid communication with the filtration membrane (16), and wherein the fluid is received from the appliance though the inlet and after the fluid comes into operative contact with first filter stage, second filter stage, and filtration membrane, the fluid is delivered back to the appliance through the outlet.

7. The fluid filter assembly of claim 6, wherein the inlet and the outlet are disposed on an attachment end of the housing (60) that engages a connection port within the filter head assembly of the appliance, and wherein the small particles include metallic ions.

8. The fluid filter assembly of claim 1, wherein the filtration membrane (16) includes a plurality of membrane layers (42) configured to construct a thin-film composite membrane, and wherein the filtration membrane is configured to electrostatically attract metallic ions and charged molecules to filter the metallic ions and charged molecules from the fluid.

9. The fluid filter assembly of claim 1, further comprising:
a tubular shaped first filter cartridge (12) having an porous outer surface configured to receive a water flow, a porous inner surface configured to dispense the water flow, and a first volume between the outer surface and the inner surface to filter large particles from the water flow;
a tubular shaped second filter cartridge (14) coaxially spaced within the first filter cartridge, wherein the second filter cartridge has a porous outside surface configured to receive the water flow from the first filter cartridge, a porous inside surface for dispensing the water flow, and a second volume between the outside surface and the inside surface to filter intermediate particles and chemicals from the water flow;
a porous filtration membrane (16) having fine pores for filtering metallic ions from the water flow, wherein the filtration membrane is disposed over the inside surface of the second filter cartridge; and
a housing (60) enclosing and removably engaging the first filter cartridge, the second filter cartridge, and the filtration membrane and having an inlet and an outlet for receiving and dispensing the water flow, respectively, to and from the appliance, wherein the housing is configured to be removably engaged with a filter head assembly of the appliance, and wherein the housing has an interior capable of being accessed by a user without the use of tools when the water filter assembly is removed from the appliance, such that the user may remove any one or more of the group consisting of the first filter cartridge, the second filter cartridge, and the filtration membrane.

10. The water filter assembly of claim 9, wherein the filtration membrane (16) is configured to dispense fluid after passing though the fine pores, and wherein the water filter assembly includes a fluid treatment segment coaxially spaced within the filtration membrane to receive fluid dispensed from the filtration membrane, treat the fluid, and dispense the fluid to the outlet of the housing.

11. The water filter assembly of claim 9, further comprising:
a pre-filter material (52) surrounding a perimeter of the first filter cartridge and spaced between the housing and the outer surface of the first filter cartridge, wherein the pre-filter material is configured to remove larger particles from the water flow than the large particles.

12. The water filter assembly of claim 9, wherein the housing (60) is substantially cylindrical shaped, and wherein the filtration membrane (16) is positioned coaxially within and removably engaged with the second filter cartridge and the second filter cartridge is positioned coaxially within and removably engaged with the first filter cartridge.

13. The water filter assembly of claim 9, wherein the housing (60) has first end that includes the inlet and outlet disposed thereon, a second end, and a channel extending between the inlet on the first end to a cavity at the second end of the interior of the housing, and wherein the cavity is in fluid communication with the outer surface of the first filter cartridge, such that the water flow passes through the first and second filter cartridge and the filtration membrane, effectively filtering the large particles, intermediate particles, chemicals, and metallic ions from the water, before the water is delivered back to the appliance through the outlet.

14. The water filter assembly of claim 13, wherein the first end of the housing removably engages a connection port within the filter head assembly of the appliance.

15. The water filter assembly of claim 9, wherein the filtration membrane includes a plurality of membrane layers configured to construct a thin-film composite membrane, and wherein the filtration membrane is constructed from a polyamide material, wherein the coarse medium of the second filter cartridge is comprised of a primarily carbon-based material.
